# EUROPÄISCHE PATENTSCHRIFT

(11) **EP 1 812 832 B1**
(45) Veröffentlichungstag und Bekanntmachung des Hinweises auf die Patenterteilung: **21.07.2010**
(21) Anmeldenummer: 05801555.3
(22) Anmeldetag: 02.11.2005
(51) Int. Cl.: G05B 19/418, G08C 17/02

(54) **FUNKEINHEIT FÜR EIN FELDGERÄT DER AUTOMATISIERUNGSTECHNIK**
RADIO UNIT FOR FIELD DEVICES USED IN AUTOMATION TECHNOLOGY
Unité radio pour des dispositifs de terrain utilisés en automatisme

(30) Priorität: 16.11.2004 DE 102004055308
(43) Veröffentlichungstag der Anmeldung: 01.08.2007
(73) Patentinhaber: Endress+Hauser Flowtec AG, 4153 Reinach (CH)
(72) Erfinder: FINK, Nikolai, CH-4147 Aesch (CH)
(74) Vertreter: Andres, Angelika Maria
(86) Internationale Anmeldenummer: PCT/EP2005/055697
(87) Internationale Veröffentlichungsnummer: WO 2006/053828

(56) Entgegenhaltungen:
- EP-A- 1 293 853
- WO-A-2004/047043
- DE-A1- 10 243 619
- DE-A1- 10 255 517

## Beschreibung

Die Erfindung betrifft eine Funkeinheit für ein Feldgerät der Automatisierungstechnik gemäß dem Oberbegriff des Anspruchs 1.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen Aktoren, die z. B. als Ventile den Durchfluss einer Flüssigkeit in einem Rohrleitungsabschnitt oder als Pumpen den Füllstand in einem Behälter steuern.

Eine Vielzahl solcher Feldgeräte wird von der Fa. Endress + Hauser hergestellt und vertrieben.

In der Regel sind Feldgeräte in modernen Fabrikationsanlagen über Feldbussysteme (HART, Profibus, Foundation Fieldbus, etc.), mit übergeordneten Einheiten (z. B. Leitsysteme oder Steuereinheiten) verbunden. Diese übergeordneten Einheiten dienen unter anderem zur Prozesssteuerung, Prozessvisualisierung, Prozessüberwachung sowie zur Inbetriebnahme der Feldgeräte. Als Feldgeräte werden allgemein solche Einheiten bezeichnet, die direkt an einen Feldbus angeschlossen sind und zur Kommunikation mit den übergeordneten Einheiten dienen (z. B. Remote I/O, Gateways, Linking Devices).

Meist sind Feldbussysteme in Unternehmensnetzwerke integriert. Damit kann aus unterschiedlichen Bereichen eines Unternehmens auf Prozess- bzw. Feldgerätedaten zugegriffen werden.

Zur weltweiten Kommunikation können die Firmennetzwerke auch mit öffentlichen Netzwerken, z. B. dem Internet verbunden sein.

Moderne Feldgeräte weisen vielfach eine standardisierte Feldbusschnittstelle zur Kommunikation mit einem offenen Feldbussystem und/oder eine proprietäre Schnittstelle zur herstellerspezifischen Kommunikation mit einer Service/Bedieneinheit auf. Häufig handelt es sich bei den Service/Bedieneinheiten um tragbare Kleinrechner (Laptops, Palms etc.), wie sie aus dem Consumer-Electronic-Bereich (Büro- und Heim-Computer) allgemein bekannt sind.

Vermehrt wird von Anwendern auch eine Funkbedienung der Feldgeräte gewünscht. Dies gilt insbesondere für solche Feldgeräte, die in einer Automatisierungsanlage an relativ unzugänglichen Stellen angeordnet sind. Über eine Funkverbindung kann der Anwender auch diese Feldgeräte einfach und komfortabel bedienen.

Denkbar ist es Feldgeräte aus diesem Grund mit einer Funkschnittstelle ausrüsten, die mit einer entsprechenden Bedieneinheit (z. B. Laptop, Palm, etc.), drahtlos kommunizieren kann.

Ein bekannter Standard im Bereich drahtlose Kommunikation ist der Bluetooth-Standard, der vielfach im Consumer-Bereich verwendet wird.

Bisher verfügbare Bluetooth-Module melden sich mit einer vorgegebenen festen Kennung in einem Funknetzwerk an.

Es wäre denkbar Feldgeräte mit einem Bluetooth-Modul auszurüsten

Eine Bedieneinheit würde das Bluetooth-Modul automatisch erkennen und die Kennung des Bluetooth-Moduls am Bildschirm der Bedieneinheit anzeigen. Über diese Kennung könnte der Anwender das betreffende Feldgerät auswählen. Für den Anwender wäre es aber äußerst störend, wenn er die Kennung des Funkmoduls einem bestimmten Feldgerät zuordnen müßte, um das betreffende Feldgerät bedienen zu können. Diese Zuordnung kann zu Verwechselungen führen und damit Bedienfehlern verursachen.

Permanent mit dem Feldgerät verbundene Funkmodule verteueren das Gerät. Die Umrüstung vorhandener Feldgeräte wäre ebenfalls sehr aufwendig und teuer.

EP 1 293 853 offenbart eine Funkeinheit gemäß Oberbegriff des Anspruchs 1.

Aufgabe der Erfindung ist es deshalb, ein Funkmodul für Feldgeräte der Automatisierungstechnik anzugeben, das die oben genannten Nachteile nicht aufweist, das insbesondere eine anwenderfreundliche Bedienung eines Feldgerätes ermöglicht und das einfach und kostengünstig ist.

Gelöst wird diese Aufgabe durch die in Anspruch angegebenen Merkmale. Vorteilhafte Weiterentwicklungen der Erfindung sind in den Unteransprüchen angegeben.

Die wesentliche Idee der Erfindung besteht darin, dass die Funkeinheit vom Feldgerät lösbar ausgebildet ist und die Kennung des Feldgerätes aus einem Speicher des Feldgerätes ausliest und diese Kennung als seine Kennung zur Anmeldung im Funknetzwerk verwendet. Der Anwender sieht somit unmittelbar an seinem Bediengerät mit welchem Feldgerät eine Funkverbindung aufgebaut werden konnte. Die Kennung kann aus einem Gerätenamen und einer TAG-Nummer oder Seriennummer bestehen. (z.B. "Promass 83; SN: DEMO9910027"). Über den Gerätenamen "Promass 83", kann der Anwender das betreffende Feldgerät einfach identifizieren, da er diese Produktbezeichnung einem Feldgerätetyp zuordnen kann. Hilfweise wird noch die Serien-Nr. ausgegeben, für den Fall dass zwei Feldgeräte eines Typs vorhanden sind.

In einer vorteilhaften Weiterentwicklung der Erfindung entspricht das Funknetzwerk dem Bluetooth-Standard. Viele aus dem Consumer-Bereich bekannten Geräte (Funktelefone, Laptops, Palms) besitzen bereits eine solche Schnittstelle. Somit können entsprechende Laptops oder Palms einfach zum Bedienen von derart ausgerüsteten Feldgeräten eingesetzt werden.

Häufig ist für die Bedienung des Feldgerätes über das am Feldgerät vorhandene Display eine Eingabe eines Sicherheitscodes notwendig. Mit diesem Sicherheitscode soll vermieden werden, dass Unberechtigte Einstellungen am Feldgerät vornehmen können.

Um eine Umgehung dieser Sicherheitsmaßnahme durch die Bedienung via Funk zu verhindern, wird in einer Weiterentwicklung der Erfindung der Zugang zum Feldgerät über das Funkmodul ebenfalls mit dem gleichen Sicherheitscode gesichert. Hierzu liest die Funkeinheit den entsprechenden Sicherheitscode aus einem Speicher im Feldgerät aus und sperrt jeden Zugriff auf das Feldgerät ohne die entsprechende Berechtigung.

Die Funkeinheit ist in passender Weise zu einer bereits im Feldgerät vorhandenen Serviceschnittstelle mit einem entsprechenden Servicesteckeranschluss ausgebildet. Diese Serviceschnittstelle ist bei vielen herkömmlichen Feldgeräten für eine drahtgebundene Kommunikation mit einer Bedieneinheit vorgesehen. Über die Service-schnittstelle kann auf beliebige Funktionen eines Feldgerätes zugegriffen werden.

Nachfolgend ist die Erfindung anhand eines in der Zeichnung dargestellten Ausführungsbeispiels näher erläutert.

Es zeigen:

Fig. 1 Netzwerk der Prozessautomatisierungstechnik mit

mehreren Feldgeräten in schematischer Darstellung;

Fig. 2 Blockschaltbild eines Feldgerätes mit Funkeinheit;

Fig. 3 Blockschaltbild einer Funkeinheit.

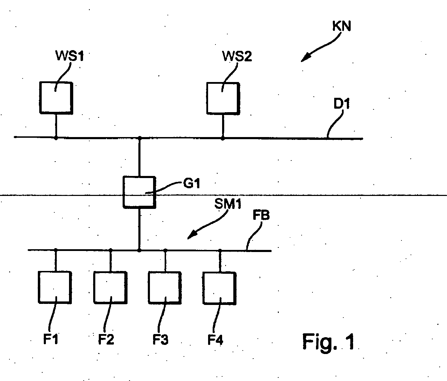

In Fig. 1 ist ein Netzwerk der Automatisierungstechnik näher dargestellt. An einem Datenbus D1 sind mehrere Rechnereinheiten in kleinere Workstations WS1, WS2, angeschlossen. Diese Rechnereinheiten dienen als übergeordnete Einheiten (Leitsystem bzw. Steuereinheit), unter anderem zur Prozessvisualisierung, Prozessüberwachung und zum Engineering wie zum Bedienen und Überwachen von Feldgeräten. Der Datenbus D1 arbeitet z. B. nach dem Profibus DP-Standard oder nach dem HSE (High Speed Ethernet)-Standard der Foundation Fieldbus. Über ein Gateway G1, das auch als Linking Device oder auch als Segment-Koppler bezeichnet wird, ist der Datenbus D1 mit einem Feldbus-Segment SM1 verbunden. Das Feldbus-Segment SM1 besteht aus mehreren Feldgeräten F1, F2, F3, F4, die über einen Feldbus FB miteinander verbunden sind. Bei den Feldgeräten F1, F2, F3, F4 kann es sich sowohl um Sensoren oder um Aktoren handeln. Der Feldbus FB arbeitet entsprechend nach einem der bekannten z.B. Feldbusstandards Profibus, Foundation Fieldbus oder HART.

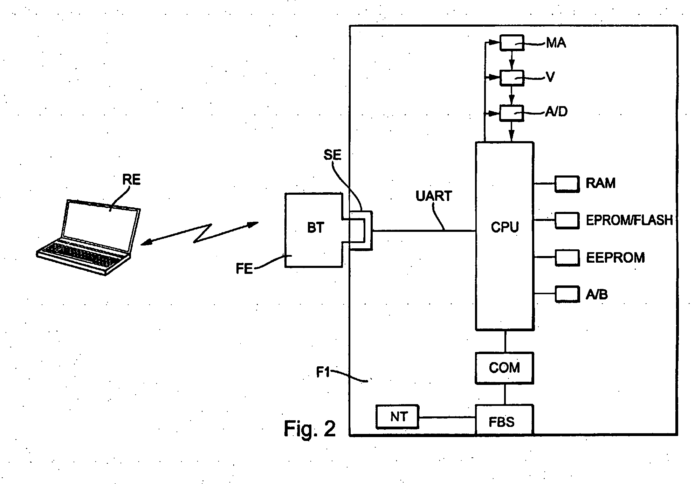

In Fig. 2 ist ein Blockschaltbild eines erfindungsgemäßen Feldgerätes z. B. F1 näher dargestellt. Eine Recheneinheit CPU ist zur Messwertverarbeitung über einen Analog-Digital-Wandler A/D und einen Verstärker V mit einem Messaufnehmer MA, der eine Prozessvariable (z. B. Druck, Durchfluss oder Füllstand) erfasst, verbunden. Die Recheneinheit CPU ist mit mehreren Speichereiheiten verbunden. Ein RAM-Speicher dient als temporärer Arbeitspeicher, ein nichtflüchtiger EPROM-Speicher EPROM oder Flash-Speicher FLASH als Speicher für das in der Recheneinheit CPU auszuführende Steuerprogramm und ein EEPROM-Speicher als Speicher für Kalibrier- und Start-Parameterwerte insbesondere für das Set-Up Programm der Recheneinheit CPU.

Das Steuerprogramm definiert die anwendungsbezogene Funktionalität des Feldgerätes (Messwertberechnung, Hüllkurvenauswertung, Linearisierung der Messwerte, Diagnoseaufgaben).

Weiterhin ist die Recheneinheit CPU mit einer Anzeigebedieneinheit A/B (z.B. LCD-Display mit 3-5 Drucktasten) verbunden.

Zur Kommunikation mit dem Feldbus-Segment SM1 ist die Recheneinheit CPU über einen Kommunikationscontroller COM mit einer Feldbusschnittstelle FBS verbunden. Ein Netzteil NT liefert die notwendige Energie für die einzelnen Elektronik-Komponenten des Feldgerätes F1. Die Versorgungsleitungen zu den einzelnen Komponenten sind der Übersichtlichkeit halber nicht eingezeichnet.

In einer alternativen Ausgestaltung der Erfindung kann die Spannungsversorgung des Feldgerätes F1 nicht über die Kommunikationsschnittstelle KS sondern über eine separate Spannungsversorgungseinheit erfolgen.

Eine UART Schnittstelle der Recheneinheit CPU ist mit einem Servicesteckeranschluss SE, der bei herkömmlichen Feldgeräten als Kabelanschluss für einen tragbaren Computer z.B. Laptop dient, verbunden. Eine erfindungsgemäße Funkeinheit FE ist mit dem Servicesteckeranschluss SE lösbar verbunden.

Über eine Recheneinheit RE kann das Feldgerät F1 in einfacher Weise drahtlos über Funk bedient werden.

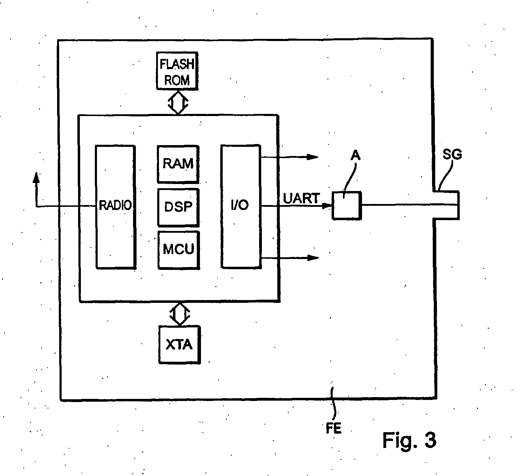

Fig. 3 zeigt ein Blockschaltbild einer Funkeinheit FE, die dem Bluetooth-Standard entspricht(z.B. Mitsumi WML-C19 oder -C20). Die Funkeinheit FE besteht im Wesentlichen aus einem Bluetooth-Modul als Single-Chip mit entsprechenden bekannten Komponenten wie Mikro-Controller MCU, digitaler Signalprozessor DSP, flüchtiger Speicher RAM und nicht flüchtiger Speicher Flash-ROM. Als Zeitbasis dient der Takt eines Schwingquarzes XTA. Die Funkverbindung erfolgt über eine mit 2.4 GHz arbeitende Radioeinheit, Radio.

Die Kommunikation zum Feldgerät hin erfolgt über ein I/O-Interface. Das I/O Interface weist neben verschiedenen Schnittstellen eine UART- Schnittstelle, auf die mit einer Anpassungseinheit A verbunden ist

Von der Anpassungseinheit A führt eine Verbindung zu einem Steckergegenstück SG, das passend zum Servicesteckeranschluss SE ausgebildet ist.

UART Schnittstellen verwenden TTL-Signale mit Pegeln von 5 oder 3,3 Volt. Gegebenenfalls ist eine Anpassung an die Signal-Pegel der UART Schnittstelle im Feldgerät F1 notwendig. Hierfür dient das Anpassungsglied A.

Nachfolgend ist die Funktion der Erfindung näher erläutert.

Wird die Funkeinheit FE mit dem Servicesteckeranschluss SE eines Feldgerätes z. B. dem Feldgerät F1 verbunden, so fragt die Funkeinheit FE die Recheneinheit CPU nach der Kennung des Feldgerätes F1. Die Recheneinheit CPU liest den entsprechenden Wert aus dem EEPROM Speicher aus und übermittelt diesen Wert an die Funkeinheit FE. In gleicher Weise wird der Sicherheitscode aus dem EEPROM Speicher ausgelesen und an die Funkeinheit FE übertragen.

Befindet sich eine Bluetooth-fähige Bedieneinheit BE in der Nähe der Funkeinheit FE bzw. des Feldgerätes F1, so erkennen sich beide Geräte und bauen automatisch eine Kommunikationsverbindung miteinander auf.

Die Funkeinheit FE identifiziert sich bei der Bedieneinheit BE mit der aus dem EEPROM Speicher des Feldgerätes F1 ausgelesenen Kennung. Auf dem Bildschirm der Bedieneinheit wird die gesamte Bluetooth-Umgebung einschließlich dieser Kennung angezeigt. Durch "Anklicken" dieser Kennung (z. B. Promass 83; SN: DEMO09910027) am Bildschirm der Bedieneinheit BE kann der Anwender das Feldgerät F1 aufrufen und mit einem entsprechenden Bedienprogramm (z. B. FieldTool von Fa. Endress+Hauser) bedienen. Es können auch mehrere Feldgeräte mit jeweils einer Funkeinheit FE ausgerüstet werden. Alle in Reichweite der Bedieneinheit BE angeordneten Feldgeräte werden dann erkannt. In diesem Fall werden mehrere unterschiedliche Kennungen auf dem Bildschirm der Bedieneinheit BE angezeigt. Für den Anwender ist die Zuordnung einer Kennung zum entsprechenden Feldgeräten sehr einfach, da eine für ihn verständliche Kennung am Bildschirm angezeigt wird.

Die Funkeinheit FE ist vorteilhaft mit beliebigen Feldgeräten, die einen Service-Steckeranschluß aufweisen, verbindbar. Trotzdem wird immer die individuelle Kennung des betreffenden Feldgerätes als Kennung im Funknetzwerk verwendet und demgemäß an der Bedieneinheit angezeigt.

Um ein unberechtigtes Bedienen des Feldgerätes zu vermeiden, ist die Eingabe eines Sicherheitscode, der identisch mit dem aus dem Feldgerät F1 ausgelesen Sicherheitscode ist, an der Bedieneinheit BE notwendig. Da die Abfrage des Sicherheitscodes durch die Funkeinheit FE erfolgt, kann bereits der Zugriff auf das Feldgerät F1 auf dieser Ebene unterbunden werden. Es wird somit nur eine Kommunikationsverbindung zum Feldgerät aufgebaut, wenn ein gültiger Sicherheitscode eingegeben wurde. Ohne gültigen Sicherheitscode wird keine Kommunikationsverbindung zu einem Feldgerät aufgebaut.

Mit Hilfe der erfindungsgemäßen Vorrichtung ist eine Funkbedienung von Feldgeräten in einfacher Weise möglich. Da bei der Funkbedienung die Kennung des Gerätes und der Sicherheitscode des Gerätes verwendet werden, besteht für den Anwender im Prinzip kein großer Unterschied zu einer direkten Bedienung am Feldgeräte. Die Zuordnung der am Bildschirm der Bedieneinheit angezeigten Kennung und dem entsprechenden Feldgerät ist eindeutig gegeben. Eine falsche Zuordnung und eine damit mögliche fehlerhafte Bedienung eines Feldgerätes sind somit ausgeschlossen.

Die Funkeinheit FE ist sehr kostengünstig und kann einfach und schnell mit verschiedenen Feldgeräten verbunden werden. Im Prinzip reicht eine Funkeinheit FE und eine Bedieneinheit BE zur drahtlosen Bedienung einer ganzen Gruppe von Feldgeräten aus.

## Patentansprüche

1. Funkeinheit (FE) für ein Feldgerät (F1) der Automatisierungstechnik,
wobei die Funkeinheit (FE) mit dem Feldgerät (F1) lösbar verbindbar ist und
wobei mittels der Funkeinheit (FE) eine Funkverbindung über ein Funknetzwerk zu einer Bedieneinheit (BE) herstellbar ist,
**dadurch gekennzeichnet,**
**dass** die Funkeinheit (FE) eine Kennung des Feldgerätes (F1) aus einem Speicher im Feldgerät (F1) ausliest und diese Kennung zur Anmeldung im Funknetzwerk verwendet.

2. Funkeinheit nach Anspruch 1,
**dadurch gekennzeichnet,**
**dass** das Funknetzwerk dem Bluetooth-Standard entspricht.

3. Funkeinheit nach Anspruch 1 oder 2,
**dadurch gekennzeichnet,**
**dass** die Funkeinheit (FE) eine für die Bedienung des Feldgerätes (F1) notwendigen Sicherheitscode aus dem Speicher ausliest, und einen Zugriff auf das Feldgerät (F1) nur erlaubt, wenn der korrekte Sicherheitscode an der Bedieneinheit eingegeben wird.

4. Funkeinheit nach einem der vorhergehenden Ansprüche,
**dadurch gekennzeichnet,**
**dass** die Funkeinheit (FE) mit einer am Feldgerät (F1) vorgesehenen Service-Schnittstelle (SE) verbindbar ist.

## Claims

1. Wireless unit (FE) for a field device (F1) used in automation engineering, where the wireless unit (FE) can be non-permanently connected to the field device (F1) and where, using the wireless unit (FE), a wireless connection to an operating unit (BE) can be established over a wireless network;
**characterized in that**:
the wireless unit (FE) reads an ID of the field device (F1) out of a memory in the field device (F1) and uses this ID to log into the wireless network.

2. Wireless unit as per Claim 1,
**characterized in that**:
the wireless network complies with the Bluetooth Standard.

3. Wireless unit as per Claim 1 or 2,
**characterized in that**:
the wireless unit (FE) reads a security code, which is required to operate the field device (F1), out of the memory and only permits access to the field device (F1) if the correct security code is entered at the operating unit.

4. Wireless unit as per one of the previous claims,
**characterized in that**:
the wireless unit (FE) can be connected to a service interface (SE) provided on the field device (F1).

## Revendications

1. Unité sans fil (FE) pour un appareil de terrain (F1) de la technique d'automatisation, l'unité sans fil (FE) pouvant être reliée par l'intermédiaire d'une liaison amovible avec l'appareil de terrain (F1) et
une liaison sans fil pouvant être établie avec une unité de commande (BE) au moyen de l'unité sans fil (FE) à travers un réseau sans fil,
**caractérisée en ce que**
l'unité sans fil (FE) lit un code d'identification de l'appareil de terrain (F1) à partir d'une mémoire se trouvant dans l'appareil de terrain (F1) et utilise ce code d'identification pour la demande de connexion au réseau sans fil.

2. Unité sans fil selon la revendication 1,
**caractérisée en ce que**
le réseau sans fil répond au standard Bluetooth.

3. Unité sans fil selon la revendication 1 ou 2,
**caractérisée en ce que**
l'unité sans fil (FE) lit à partir de la mémoire un code de sécurité nécessaire pour la commande de l'appareil de terrain (F1), et autorise un accès à l'appareil de terrain (F1) uniquement si le code de sécurité correct est entré sur l'unité de commande.

4. Unité sans fil selon l'une des revendications précédentes,
**caractérisée en ce que**
l'unité sans fil (FE) peut être reliée avec une interface de service (SE) prévue sur l'appareil de terrain (F1).
